**Europäisches Patentamt**

**European Patent Office**

**Office européen des brevets**

(19)

(11) Numéro de publication: **0 226 686 B1**

# FASCICULE DE BREVET EUROPEEN

(12)

(45) Date de publication du fascicule du brevet:
29.11.89

(21) Numéro de dépôt: 85402578.0

(22) Date de dépôt: 20.12.85

(51) Int. Cl.⁴: **B01D 9/00**, C30B 13/00, C01B 21/16

(54) **Procédé de préparation d'hydrazine anhydre à partir d'hydrate d'hydrazine.**

(43) Date de publication de la demande:
01.07.87 Bulletin 87/27

(45) Mention de la délivrance du brevet:
29.11.89 Bulletin 89/48

(84) Etats contractants désignés:
AT BE CH DE GB IT LI LU NL SE

(56) Documents cités:
DE-B- 1 015 804
FR-A- 1 080 894
US-A- 3 652 218

JOURNAL OF APPLIED CHEMISTRY OF THE USSR, vol. 51, no. 11, partie 2, novembre 1978, pages 2491-2492, Plenum Publishing Corp., New York, US; L.V. LITVINOVA et al.: "Preparation of pure hydrazine by directional crystallization"
INDIAN J. TECHN., vol. 2, 1964, page 109; M.S. BAINS et al.: "Azeotropic dehydration of hydrazine"

(73) Titulaire: CENTRE NATIONAL D'ETUDES SPATIALES, 2, Place Maurice Quentin, F-75001 Paris(FR)

(72) Inventeur: Abraham, Robert, 18D Rue Henri Chevalier, F-69300 Caluire(FR)
Inventeur: Aubry, Bernard Michel, 12 Chemin du Coin Fermé, F-31100 Toulouse(FR)
Inventeur: Cohen-Adad, Roger Elie, Lieu-dit Accole Sud Ste Catherine, F-69440 Mornant(FR)
Inventeur: Saugier-Cohen-Adad, Marie-Thérèse Eliane, Lieu-dit Accole Sud Ste Catherine, F-69440 Mornant(FR)

(74) Mandataire: de Boisse, Louis Arnaud et al, CABINET de BOISSE 37, Avenue Franklin D. Roosevelt, F-75008 Paris(FR)

## Description

L'invention concerne un procédé de préparation d'hydrazine anhydre de pureté supérieure à partir d'hydrate d'hydrazine, qui met en œuvre une opération de purification par cristallisation de zone.

On connaît par DE-B 1 015 804, des procédés de purification de composés organiques impurs ne formant pas de solution solide avec leurs impuretés par la méthode de la zone fondue ou par la méthode de réfrigération par zones. Dans le seul exemple donné (exemple 9) illustrant la méthode de réfrigération par zones, un tube de 50 cm de long, rempli de n-décane impur, est passé dans une zone de refroidissement de 2 cm de long, sur les 9/10 de sa longueur. Après élimination de la partie résiduelle se trouvant au-dessus de la couche cristallisée, on recueille du n-décane purifié. Dans ce procédé antérieur, la couche cristallisée est incluse dans le produit purifié finalement recueilli, ce qui amoindrit l'efficacité du procédé et le rend impropre au traitement de composés impurs formant des solutions solides avec leurs impuretés.

On connaît également par un article de L.V. Litvinova et autres, paru dans le Journal of Applied Chemistry of the U.S.S.R., vol. 51, N° 11, partie 2, Novembre 1978, pages 2491–2492, un procédé de préparation d'hydrazine pure consistant à soumettre de l'hydrazine impure à un processus de cristallisation progressive consistant à congeler toute une partie d'un tube rempli de l'hydrazine impure de manière à obtenir une partie congelée purifiée et une partie demeurant liquide enrichie en impuretés. Par élimination d'une portion de la zone liquide on obtient un produit plus pur.

L'hydrazine anhydre est un produit utilisé notamment comme combustible pour moteurs de stabilisation de satellite. Actuellement, l'hydrazine anhydre est principalement préparée à partir d'hydrate d'hydrazine, un produit bon marché disponible en grandes quantités dans le commerce qui titre habituellement 64–64,5% en poids d'hydrazine, par distillation azéotropique. En effet, l'ébullition de mélanges eau-hydrazine conduit à un azéotrope à maximum pour une teneur massique en hydrazine de 71,5% en poids. Toutefois ce procédé n'est pas entièrement satisfaisant car la distillation azéotropique présente deux inconvénients majeurs:

– risques d'incendie ou d'explosion

– introduction de traces d'impuretés organiques gênantes pour les applications aérospatiales, ce qui conduit à retraiter le produit anhydre obtenu par la distillation azéotropique, avec accroissement concomitant du prix de revient.

Un procédé de déshydratation azéotropique amélioré de l'hydrazine est connu, par ailleurs, par un article de M.S. Bains et C.L. Jain, paru dans Indian J. Tech., vol. 2, 1964, page 109. Ce procédé est basé sur la distillation d'un azéotrope ternaire benzène-alcool-eau.

L'invention vise à fournir un procédé de préparation d'hydrazine anhydre à partir d'hydrate d'hydrazine, qui met en jeu une opération de purification par cristallisation de zone, est exempt des inconvénients précités et fournit un produit substantiellement exempt d'impuretés organiques et contenant au moins 99% en poids d'hydrazine.

Plus particulièrement, l'invention concerne un procédé de préparation d'hydrazine de haute pureté à partir d'hydrate d'hydrazine, caractérisé en ce qu'il comprend les étapes suivantes:

a) dissoudre dans de l'hydrate d'hydrazine, à une température de 50 à 100°C, une quantité de soude provoquant la formation de deux phases liquides, une phase lourde appauvrie en hydrazine et une phase légère enrichie en hydrazine;

b) séparer la phase légère de la phase lourde;

c) faire passer la phase légère sur une résine échangeuse de cations pour éliminer les ions $Na^+$ contenus dans ladite phase légère; et

d) soumettre la phase légère désionisée à une opération de purification par cristallisation de zone consistant à

(i) remplir un tube allongé de la phase légère liquide impure,

(ii) disposer autour d'une des extrémités du tube au moins un manchon de courte longueur par rapport à la longueur de tube, ce manchon étant refroidi à une température comprise dans l'intervalle de cristallisation ou de solidification de la phase légère liquide impure, de façon à provoquer la formation d'un bouchon solide cristallisé dans la région de ladite extrémité,

(iii) déplacer lentement et relativement le tube vis-à-vis du manchon de façon à faire progresser ledit bouchon dans la direction de l'autre extrémité dudit tube, la partie précédemment cristallisée dans le tube refondant après le passage du manchon,

(iv) poursuivre le déplacement relatif du tube et du manchon jusqu'à ce qu'au moins 0,4 fois la longueur du tube ait traversé le manchon, et

(v) recueillier le produit liquide purifié refondu se trouvant à l'arrière du bouchon cristallisé.

L'étape (a) doit être mise en œuvre à une température d'au moins 50°C car c'est à partir de cette température seulement que se produit le phénomène de démixtion dont on tire parti, c'est-à-dire la formation de deux phases liquides (une lourde et une légère). Il ne faut pas par ailleurs dépasser 100°C afin d'éviter les complications liées à la tension de vapeur de l'hydrazine. On opère de préférence entre 70 et 90°C. En effet, à partir de 70°C, la phase légère atteint une teneur en hydrazine de l'ordre de 90 % en

2

poids qui n'augmente ensuite que très lentement avec l'élévation de température, si bien que pour des raisons économiques et pratiques, il est peu intéressant de travailler au-dessus de 90°C.

La quantité de soude à ajouter n'est pas étroitement critique mais il est avantageux que la concentration de soude se situe à la limite (ou au voisinage de celle-ci) de la saturation en soude (ou en monohydrate de soude selon la température à laquelle on opère). A titre indicatif, la quantité de soude ajoutée peut aller de 70 à 120 parties en poids par 100 parties en poids d'hydrate d'hydrazine.

L'étape (b) peut être effectuée de diverses manières. La plus commode est d'éliminer la phase lourde par un simple soutirage. Cette phase lourde peut être jetée ou, mieux, traitée en vue de récupérer l'hydrazine et la soude qu'elle contient.

Après avoir séparé la phase légère riche en hydrazine, on la refroidit, de préférence, à la température ambiante ou en dessous. Au cours de ce refroidissement, il se produit typiquement une précipitation d'une partie de la soude contenue dans la phase légère, sous forme de soude hydratée.

La phase légère refroidie est alors passée sur une résine échangeuse de cations en vue de substituer des ions $H^+$ aux ions $Na^+$. A cette fin, on peut utiliser toute résine échangeuse de cations. Un exemple de telles résines est la DUOLITE C20 vendue par la Société DUOLITE INTERNATIONAL, Créteil, France.

Après l'étape (c) de traitement à la résine, il ne subsiste pratiquement plus de soude dans le produit phase légère composé d'hydrazine et d'une quantité mineure d'eau.

Dans l'étape (d), par «opération de purification de cristallisation de zone» on désigne une opération consistant à remplir un tube allongé avec de la phase légère désionisée, à disposer un manchon de courte longueur par rapport à la longueur du tube et refroidi à une température comprise dans l'intervalle de cristallisation ou de solidification de la phase légère désionisée, c'est-à-dire inférieure à la température de cristallisation de la phase légère désionisée à purifier mais supérieure à la température de l'eutexie hydrazine/monohydrate d'hydrazine, à savoir –54°C, à l'une des extrémités dudit tube de façon à provoquer la formation d'un bouchon solide de phase légère dans la région de ladite extrémité, puis à déplacer relativement le tube vis-à-vis du manchon de façon à faire progresser ledit bouchon dans la direction de l'autre extrémité dudit tube, la partie précédemment cristallisée de produit dans le tube refondant après le passage du manchon, à poursuivre le déplacement du manchon jusqu'à une distance qui dépend de l'écart entre la température de cristallisation de la solution mise en œuvre et la température du bouchon, et à recueillir le produit liquide se trouvant à l'arrière du bouchon cristallisé, c'est-à-dire la partie du liquide ayant refondu. On poursuit le déplacement du manchon jusqu'à une distance égale à au moins 0,4 fois la longueur du tube et, de préférence, on refroidit le manchon entre –15 et –40°C, ces conditions s'étant révélées généralement satisfaisantes dans les essais effectués. En général, la purification est d'autant plus efficace que la température du bouchon est basse. Au-dessous de –40°C, on se heurte toutefois à des complications technologiques qui diminuent l'intérêt d'opérer à une température plus basse.

Si nécessaire, le produit recueilli peut être soumis à une ou plusieurs opérations de cristallisation de zone similaires supplémentaires jusqu'à obtention du degré de pureté désiré.

En variante, au lieu d'effectuer plusieurs opérations de cristallisation de zone distinctes successives comme décrit ci-dessus, on peut réaliser deux ou plusieurs opérations de cristallisation de zone simultanément en utilisant un ensemble de deux ou plusieurs manchons espacés les uns des autres et en déplaçant le tube vis-à-vis de ces manchons de façon que la phase légère désionisée contenue dans ledit tube soit soumise à deux ou plusieurs congélation-fusion successives au fur et à mesure du déplacement. Evidemment, il conviendra de recueillir le produit se trouvant à l'arrière du dernier manchon de l'ensemble.

Au cours du déplacement du ou des manchons, la portion de phase légère se trouvant à l'avant du manchon (ou du premier manchon lorsqu'on en utilise plusieurs) s'enrichit en impuretés. Il convient d'arrêter le déplacement relatif du ou des manchons vis-à-vis du tube avant que la concentration du liquide enrichi en impuretés ne devienne égale à la concentration de la solution saturée en impuretés à la température du manchon réfrigérant, car, dans ce cas, il ne se formerait plus de bouchon solide et il n'y aurait plus de séparation entre le liquide purifié et le liquide à purifier. Selon les conditions opératoires, la distance de déplacement du manchon peut aller jusqu'à 0,9 fois la longueur du tube.

L'efficacité d'une opération de cristallisation de zone dépend aussi de la vitesse de déplacement relatif du tube par rapport au manchon. Cette vitesse sera appelée ci-après vitesse de tirage. Plus la vitesse de tirage est lente, plus la purification obtenue par cristallisation de zone est meilleure. Habituellement, la vitesse de tirage employée sera dans la gamme de 0,5 à 20 cm/heure, mais ces valeurs n'ont pas un caractère critique et ne sont données qu'à titre indicatif. Avec de telles vitesses de tirage, il peut être nécessaire de pratiquer 2 à 6 opérations de cristallisation de zone nécessaires pour obtenir un produit purifié titrant plus de 99 % en poids d'hydrazine.

Le tube contenant le produit à purifier peut être disposé horizontalement ou verticalement. Habituellement on préfère déplacer le tube par rapport au manchon plutôt que l'inverse, étant donné que le manchon réfrigérant doit être relié à une source de fluide réfrigérant.

Egalement, on peut envisager d'utiliser un manchon ou plusieurs manchons à travers le(s)quel(s) passeraient deux ou plusieurs tubes remplis de liquide à purifier et que l'on déplacerait simultanément relativement au(x)dit(s) manchon(s) à orifices multiples.

Sur les dessins,

la figure 1 est une vue schématique illustrant un dispositif de cristallisation de zone et sa mise en œuvre, et

la figure 2 est une vue schématique illustrant un autre dispositif de cristallisation de zone et sa mise en œuvre.

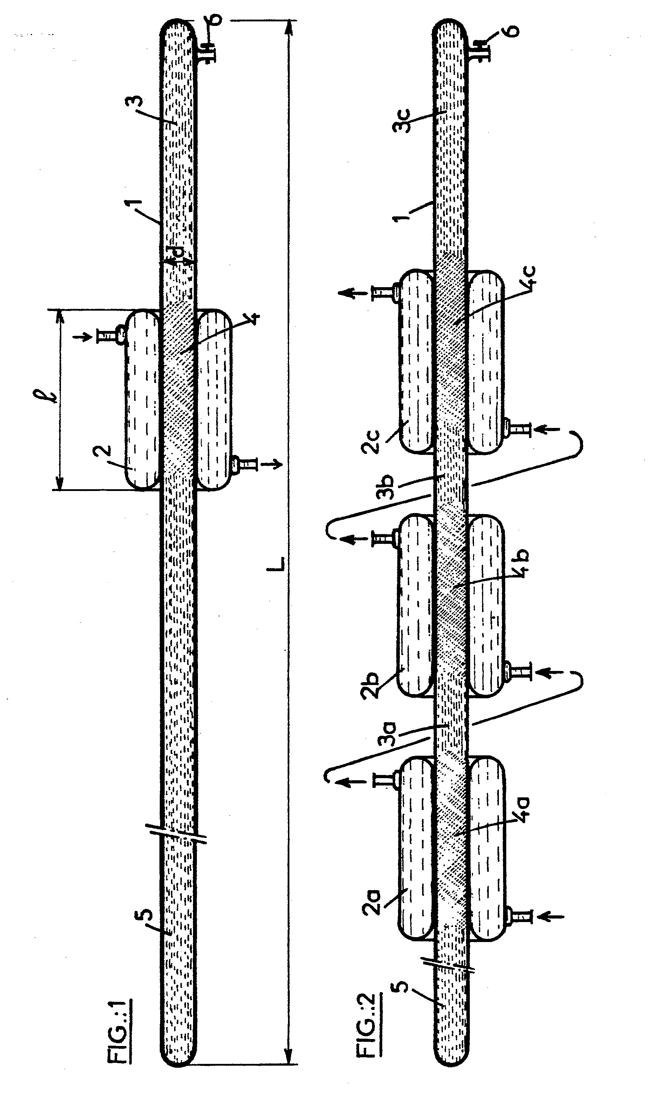

Sur la figure 1, on voit un tube 1 de diamètre intérieur d et de longueur L capable d'être déplacé en translation par des moyens non représentés à travers un manchon 2 creux, de longueur 1, parcouru par un fluide réfrigérant approprié. L'ensemble est représenté en cours de réalisation d'une opération de cristallisation de zone. Le produit contenu dans le tube 1 se répartit en une zone liquide déjà purifiée 3, un bouchon cristallisé solide 4 se trouvant au droit du manchon et une zone liquide 5 enrichie en impuretés. Le bouchon 4 se déplace de la droite vers la gauche à mesure que l'on déplace le tube 1 vers la droite. Une fois l'opération jugée terminée, on peut soutirer le produit purifié 3 en ouvrant le robinet 6 prévu vers l'extrémité droite du tube.

Sur la figure 2, on a illustré une variante de réalisation. Cette variante diffère du dispositif de la figure 1 uniquement en ce qu'on utilise trois manchons réfrigérants 2a, 2b et 2c espacés et reliés en série au lieu d'un manchon unique. Avec cette variante, on forme trois bouchons cristallisés solides 4a, 4b et 4c successifs. Le liquide 3a est plus pur que le liquide à purifier de départ, le liquide 3b est plus pur que le liquide 3a, et le liquide 3c qui est encore plus pur que le liquide 3b est le liquide que l'on soutire finalement par le robinet 6. Cette variante présente une efficacité de purification globalement supérieure au dispositif de la figure 1 et permet de simplifier l'étape (d) en réduisant le nombre de manipulations nécessaires.

Les exemples non limitatifs ci-après sont donnés en vue d'illustrer l'invention.

Exemple 1

Cet exemple illustre la réalisation des étapes a), b) et c) du procédé de l'invention.

On chauffe à 70°C 100 g d'hydrate d'hydrazine titrant 64,01 % en hydrazine. On y ajoute 88,7 g de NaOH de façon à obtenir un mélange contenant, en poids, 53 % de $N_2H_4.H_2O$ et 47 % de NaOH. Ce mélange se sépare spontanément en 123,6 g d'une phase dense (densité $\simeq$ 1,6) représentant environ 65,5 % en poids du mélange de départ et composée, en poids, de 66,76 % de NaOH, 7,28 % de $N_2H_4$ et d'eau pour le reste, et en 65,1 g d'une phase légère (densité $\simeq$ 1,0) représentant environ 34,5 % en poids du mélange de départ et composée, en poids, de 90,3 % de $N_2H_4$, de 2,07 % de NaOH et d'eau pour le reste. Cette phase légère contient 87 % de la $N_2H_4$ de départ. On sépare la phase légère de la phase dense en soutirant cette dernière. On refroidit la phase légère séparée à 25°C environ. Il se produit une petite précipitation de soude au cours de ce refroidissement. On filtre pour éliminer la soude précipitée et pour obtenir un filtrat titrant, en poids, 92,2 % de $N_2H_4$, 0,8 % de NaOH et 7 % d'eau. On fait passer le filtrat sur une colonne remplie de résine cationique DUOLITE ® C20 et on obtient à la sortie de la colonne un produit désionisé titrant, en poids, 92,9 % de $N_2H_4$, 7,1 % en poids d'eau et 0,00 % de NaOH.

Exemple 2

Cet exemple illustre l'effet de la température dans l'étape (a) de démixtion.

A 100 g d'hydrate d'hydrazine titrant 64,01 % en hydrazine, on a ajouté à la température indiquée dans le tableau I ci-après la quantité de soude également indiquée dans ledit tableau I, qui donne également les caractéristiques des phases obtenues.

On voit d'après les résultats indiqués que la teneur en hydrazine de la phase légère dépasse 90 % pour une température de 70°C et n'augmente plus ensuite que très légèrement lorsqu'on élève la température jusqu'à 100°C. Il n'y a donc aucun avantage à opérer à des températures élevées et pour des raisons pratiques et économiques, il y a avantage à opérer à une température de l'ordre de 70°C et en tout cas ne dépassant pas 90°C.

Tableau I

| T°C | NaOH ajoutée, grammes | % de N$_2$H$_4$ de départ dans la phase dense | phase légère | constituants | Composition du mélange global, % | Composition de la phase légère, % | Composition de la phase dense, % |
|-----|-----|-----|-----|-----|-----|-----|-----|
| 100 | 98,0 | 12,12 | 87,88 | NaOH | 49,5 | 2,4 | 70,3 |
|     |      |       |       | N$_2$H$_4$ | 32,5 | 92,7 | 5,7 |
| 90 | 92,3 | 12,14 | 87,86 | NaOH | 48 | 2,0 | 69,3 |
|    |      |       |       | N$_2$H$_4$ | 33,5 | 92,2 | 5,9 |
| 70 | 86,9 | 13,02 | 86,98 | NaOH | 46,5 | 3,2 | 67,6 |
|    |      |       |       | N$_2$H$_4$ | 34,5 | 90,9 | 6,7 |
| 60 | 71 | 26,56 | 73,44 | NaOH | 41,5 | 9,1 | 51,3 |
|    |    |       |       | N$_2$H$_4$ | 37,5 | 77,5 | 19,0 |

Exemple 3

Cet exemple illustre l'étape (d) de purification par cristallisation de zone.

On a utilisé un tube de 150 cm de longueur L et de 1,5 cm de diamètre intérieur d, monté verticalement et capable d'être déplacé de bas en haut à travers un manchon réfrigérant de 15 cm de longueur 1 positionné initialement au sommet du tube. La température du fluide réfrigérant parcourant le manchon était de −28°C.

On a rempli le tube d'un produit obtenu par un mode opératoire du même genre que celui décrit à l'exemple 1, si ce n'est qu'il titrait 91,3 % en poids de N$_2$H$_4$, 8,7 % d'eau et 0,00 % de NaOH.

On a effectué trois essais à des vitesses de tirage différentes, à savoir 18,2 ; 7 et 1,8 cm/heure.

Le produit purifié recueilli était soutiré et soumis à des opérations de cristallisation de zone supplémentaires. Après chaque opération, le produit purifié recueilli a été analysé en ce qui concerne sa concentration en hydrazine.

Les résultats obtenus sont récapitulés dans le tableau II ci-dessous.

Tableau II

| Vitesse de tirage (cm/h) | 18,2 | 7 | 1,8 |
|-----|-----|-----|-----|
| nombre d'opérations | Concentration de l'hydrazine (% en poids) | | |
| 1 | 94,0 | 96,0 | 98,0 |
| 2 | 96,0 | 98,1 | 99,5 |
| 3 | 97,2 | 99,15 | 99,8 |
| 4 | 98,1 | 99,6 | 99,91 |
| 5 | 98,7 | | |
| 6 | 99,1 | | |

On voit, d'après ces résultats, qu'à la vitesse de tirage de 1,8 cm/h deux opérations de cristallisation de zone suffisent pour obtenir un produit titrant plus de 99 % en poids d'hydrazine alors qu'il en faut six à la vitesse de tirage de 18,2 cm/h.

Il va de soi que les modes de réalisation décrits ne sont que des exemples et qu'on pourrait les modifier, notamment par substitution d'équivalents techniques, sans sortir pour cela du cadre de l'invention.

**Revendications**

1. Procédé de préparation d'hydrazine anhydre de haute pureté à partir d'hydrate d'hydrazine, comprenant les étapes suivantes:

a) dissoudre dans de l'hydrate d'hydrazine, à une température de 50 à 100°C, une quantité de soude provoquant la formation de deux phases liquides, une phase lourde appauvrie en hydrazine et une phase légère enrichie en hydrazine;

b) séparer la phase légère de la phase lourde;

c) faire passer la phase légère sur une résine échangeuse de cations pour éliminer les ions Na$^+$ contenus dans ladite phase légère; et

d) soumettre la phase légère désionisée à une opération de purification par cristallisation de zone consistant à

(i) remplir un tube allongé de la phase légère liquide impure,

(ii) disposer autour d'une des extrémités du tube au moins un manchon de courte longueur par rapport à la longueur de tube, ce manchon étant refroidi à une température comprise dans l'intervalle de cristallisation ou de solidification de la phase légère liquide impure, de façon à provoquer la formation d'un bouchon solide cristallisé dans la région de ladite extrémité,

(iii) déplacer lentement et relativement le tube vis-à-vis du manchon de façon à faire progresser ledit bouchon dans la direction de l'autre extrémité dudit tube, la partie précédemment cristallisée dans le tube refondant après le passage du manchon,

(iv) poursuivre le déplacement relatif du tube et du manchon jusqu'à ce qu'au moins 0,4 fois la longueur du tube ait traversé le manchon, et

(v) recueillir le produit liquide purifié refondu se trouvant à l'arrière du bouchon cristallisé.

2. Procédé selon la revendication 1, caractérisé en ce que l'étape (a) est mise en œuvre à une température de 70 à 90°C.

3. Procédé selon la revendication 1 ou 2, caractérisé en ce que, dans l'étape (a), on ajoute de 70 à 120 parties en poids de soude pour 100 parties en poids d'hydrate d'hydrazine.

4. Procédé selon l'une quelconque des revendications 1 à 3, caractérisé en ce que, après l'étape (b), on refroidit la phase légère à la température ambiante ou en-dessous.

5. Procédé selon l'une quelconque des revendications 1 à 4, caractérisé en ce que dans l'étape (d) (iii) la vitesse de déplacement relative du tube vis-à-vis du manchon est comprise dans la gamme de 0,5 à 20 cm/heure.

6. Procédé selon l'une quelconque des revendications 1 à 5, caractérisé en ce que la température du ou des manchons réfrigérants est comprise dans la gamme de −15 à −40°C.

## Patentansprüche

1. Verfahren zum Herstellen von wasserfreiem Hydrazin hoher Reinheit aus Hydrazin-Hydrat, das die folgenden Schritte aufweist:

a) in dem Hydrazin-Hydrat wird bei einer Temperatur von 50 bis 100°C eine Menge Soda aufgelöst, die die Bildung zweier flüssiger Phasen hervorruft, und zwar einer an Hydrazin abgemagerten schweren Phase und einer an Hydrazin angereicherten leichten Phase;

b) die leichte Phase wird von der schweren Phase getrennt;

c) die leichte Phase wird über ein Kationen tauschendes Harz geleitet, um die in der leichten Phase enthaltenen Na$^+$ Ionen zu eliminieren, und

d) die entionisierte leichte Phase wird einem Reinigungsvorgang durch Zonenkristallisation unterworfen, die darin besteht,

I) daß ein Rohr mit der unreinen leichten flüssigen Phase gefüllt wird,

II) daß um ein Ende des Rohres mindestens ein Mantel gelegt wird, der eine kurze Länge bezüglich der Rohrlänge besitzt, wobei dieses Rohr bei einer Temperatur gekühlt wird, die im Bereich der Kristallisation oder der Verfestigung der unreinen leichten flüssigen Phase liegt, derart, daß ein kristallisierter fester Stopfen in dem Bereich dieses Endes erzeugt wird,

III) daß das Rohr langsam und relativ bezüglich des Mantels so verschoben wird, daß der Stopfen in Richtung auf das andere Ende des Rohres wandert, wobei der vorher kristallisierte Teil im Rohr nach Vorbeiwandern des Mantels wieder schmilzt, IV) daß die Verschiebung zwischen dem Rohr und dem Mantel fortgesetzt wird, bis mindestens das 0,4fache der Länge des Rohres den Mantel durchlaufen hat, und V) daß das wieder geschmolzene gereinigte flüssige Produkt aufgefangen wird, das sich hinter dem kristallisierten Stopfen befindet.

2. Verfahren nach Anspruch 1, dadurch gekennzeichnet, daß der Schritt (a) bei einer Temperatur von 70–90°C durchgeführt wird.

3. Verfahren nach Anspruch 1 oder 2, dadurch gekennzeichnet, daß bei dem Schritt (a) 70 bis 120 Gewichtsteile oder pro 100 Gewichtsteile Hydrazin-Hydrat zugegeben werden.

4. Verfahren nach einem der Ansprüche 1 bis 3, dadurch gekennzeichnet, daß nach dem Schritt (b) die leichte Phase auf Umgebungstemperatur oder darunter gekühlt wird.

5. Verfahren nach einem der Ansprüche 1 bis 4, dadurch gekennzeichnet, daß bei dem Schritt (d) (III) die Geschwindigkeit der Relativverschiebung des Rohres bezüglich des Mantels im Bereich von 0,5 bis 20 cm/h liegt.

6. Verfahren nach einem der Ansprüche 1 bis 5, dadurch gekennzeichnet, daß die Temperatur des Kühlmantels bzw. der Kühlmäntel im Bereich von −15 bis −40°C liegt.

## Claims

1. Process for the preparation of anhydrous hydrazine of high purity from hydrazine hydrate, comprising the following stages:

a) dissolving in hydrazine hydrate, at a temperature from 50 to 100°C, a quantity of caustic soda which causes the formation of two liquid phases, a heavy phase which is impoverished in hydrazine and a light phase which is enriched in hydrazine;

b) separating the light phase from the heavy phase;

c) passing the light phase over a cation exchange resin to remove the $Na^+$ ions contained in the said light phase; and

d) subjecting the deionized light phase to a purification operation by zone crystallization consisting in

(i) filling an elongated tube with the impure light liquid phase,

(ii) arranging around one of the extremities of the tube at least one sleeve with a short length compared with the length of the tube, this sleeve being cooled to a temperature within the crystallization or solidification region of the impure light liquid phase, so as to cause the formation of a solid crystallized plug in the region of the said extremity,

(iii) moving the tube slowly with respect to the sleeve so as to cause the said plug to progress in the direction of the other extremity of the said tube, the previously crystallized portion in the tube melting again after passage of the sleeve,

(iv) continuing the relative displacement of the tube and the sleeve until at least 0.4 times the length of the tube has travelled through the sleeve and,

(v) collecting the purified melted liquid product which is behind the crystallized plug.

2. Process according to claim 1, characterized in that stage (a) is carried out at a temperature from 70 to 90°C.

3. Process according to claim 1 or 2, characterized in that, in stage (a), from 70 to 120 parts by weight of caustic soda are added for 100 parts by weight of hydrazine hydrate.

4. Process according to any one of claims 1 to 3, characterized in that, after stage (b), the light phase is cooled to ambient temperature or below.

5. Process according to any one of claims 1 to 4, characterized in that in stage (d) (iii) the relative speed of displacement of the tube with respect to the sleeve is within the range of 0.5 to 20 cm/hour.

6. Process according to any one of claims 1 to 5, characterized in that the temperature of the refrigerating sleeve or sleeves is within the range −15 to −40°C.

FIG.:1

FIG.:2

EP 0 226 686 B1